# EUROPEAN PATENT SPECIFICATION

(11) **EP 1 932 886 B1**
(45) Date of publication and mention of the grant of the patent: **10.11.2010**
(21) Application number: 06797288.5
(22) Date of filing: 01.09.2006
(51) Int. Cl.: C08L 71/02, C08B 37/16, C08G 83/00, C08J 3/09, C08L 101/00

(54) **POLYROTAXANE-CONTAINING SOLUTION AND USE THEREOF**
POLYROTAXANHALTIGE LÖSUNG UND VERWENDUNG DAVON
SOLUTION CONTENANT UN POLYROTAXANE ET UTILISATION DE CELLE-CI

(30) Priority: 02.09.2005 JP 2005255129
(43) Date of publication of application: 18.06.2008
(73) Proprietor: The University of Tokyo, Bunkyo-ku, Tokyo 113-8654 (JP)
(72) Inventor: ITO, Kohzo, Tokyo 113-8654 (JP); ARAKI, Jun, Tokyo 113-8654 (JP); SAMITSU, Sadaki, Tokyo 113-8654 (JP); NAKAJIMA, Takao, Tokyo 113-8654 (JP)
(74) Representative: HOFFMANN EITLE
(86) International application number: PCT/JP2006/317346
(87) International publication number: WO 2007/026879

(56) References cited:
- WO-A1-03/074099
- WO-A1-2005/080469
- WO-A1-2005/080470
- WO-A1-2005/095493
- WO-A1-2005/108464
- JP-A- 2003 073 591
- JP-A- 2003 257 236
- JP-A- 2003 257 488
- JP-A- 2003 327 545
- JP-A- 2005 220 317
- JP-A- 2006 028 103
- TAMURA M., DE GAO, UENO A.: "A polyrotaxane series containing alpha-cyclodextrin and naphthalene-modified alpha-cyclodextrine as a ligth-harvesting antenna system" CHEMISTRY AN EUROPEAN JOURNAL, vol. 7, no. 7, 2001, pages 1390-1397, XP002487317
- KALASHNIKOV P.A.,SOKOLOV V.I:, TOPCHIEVA I.N.: "Synthesis of polyrotaxanes based on alpha-cyclodextrin and poly(ethylene oxide)" RUSSIAN CHEMICAL BULLETIN INTERNATIONAL EDITION, vol. 54, no. 8, August 2005 (2005-08), pages 1973-1977, XP002487318
- PARK H.D. LEE W.K., OOYA T., PARK K.D., KIM Y.H., YUI N.: "In vitro biocompatibility assessment of sulfonated polyrotaxane-immobilized polyurethane surfaces" JOURNAL OF BIOMEDICAL MATERIALS RESEARCH, vol. 66a, 2003, pages 596-604, XP002487319
- WATANABE J ET AL: "Effect of acetylation of biodegradable polyrotaxanes on its supramolecular dissociation via terminal ester hydrolysis" JOURNAL OF BIOMATERIALS SCIENCE. POLYMER EDITION, VSP, UTRECHT, vol. 10, no. 12, 1 January 1999 (1999-01-01), pages 1275-1288, XP002969569 ISSN: 0920-5063
- JOUNG ET AL: "Anticoagulant supramolecular-structured polymers: Synthesis and anticoagulant activity of taurine-conjugated carboxyethylester-polyrotaxanes" SCIENCE AND TECHNOLOGY OF ADVANCED MATERIALS, ELSEVIER, OXFORD, GB, vol. 6, no. 5, 1 July 2005 (2005-07-01), pages 484-490, XP005059102 ISSN: 1468-6996
- PARK D.H., LEE W.K.,OOYA T., PARK K.D., KIM Y.H. ,YUI N.: "Anticoagulant activity of sulfonated polyrotaxanes as blood -compatible materials" JOURNAL OF BIOMEDICAL MATERIALS RESEARCH, vol. 60, 2002, pages 186-190, XP002487693

## Description

### TECHNICAL FIELD

The present invention relates to a polyrotaxane-containing solution, wherein a polyrotaxane is dissolved in a solvent(s) selected from the group consisting of a tertiary amine oxide or a hydrate thereof , an amide-based organic solvent containing an alkali metal halide or an alkaline earth metal halide and an ionic liquid.
In addition, the present invention relates to the use of the polyrotaxane-containing solution, and more particularly, to a method for derivatizing a polyrotaxane by using the solution, and novel polyrotaxane derivatives obtained by the method.

### BACKGROUND ART

A polyrotaxane has a linear molecule (axis) passing through an opening(s) of a cyclic molecule(s) (rotator) in a skewered manner so that the cyclic molecule(s) include the linear molecule to form a pseudo-polyrotaxane in which blocking groups are arranged on both ends thereof (both ends of the linear molecule) to prevent elimination of the cyclic molecule(s). In a typical example of a polyrotaxane, α-cyclodextrin ("cyclodextrin" may be simply abbreviated as "CD") is used for the cyclic molecule(s) and polyethylene glycol (to be abbreviated as "PEG") is used for the linear molecule (see, for example, Patent Document 1). Considerable research and applications have been conducted thereon in recent years.

Unfortunately, research and applications of polyrotaxanes are severely limited due to the poor solubility of polyrotaxanes, or in other words, the lack of a good solvent. For example, the only known good solvents for the aforementioned polyrotaxane comprising the inclusion of PEG by CD are dimethylsulfoxide (DMSO) and aqueous NaOH, and this polyrotaxane has been reported to be insoluble in other solvents (see, for example, Non-Patent Documents 1 to 3).

However, the use of non-volatile DMSO or strongly alkaline aqueous NaOH is accompanied by inconvenience due to difficulties in forming a film by casting or in distilling off the solvent after various reactions. Moreover, there are numerous reactions that cannot be carried out in systems in which these solvents are present. Consequently, there has been a desire to develop a good solvent for polyrotaxanes.
Patent Document 1: Japanese Patent No. 2810264
Non-Patent Document 1: Harada, A., Li, J., Kamachi, M., Macromolecules 1990, 23, 2821-2823
Non-Patent Document 2: Harada, A., Li, J., Kamachi, M., Nature 1992, 356, 325-327
Non-Patent Document 3: Harada, A., Li, J., Kamachi, M., Nature 1993, 364, 516-518

Tamura M., De Gao, Ueno A.: "A polyrotaxane series containing alpha-cyclodextrin and naphthalene-modified alpha-cyclodextrine as a ligth-harvesting antenna system" discloses on page 1391, left column under the headline "Results and Discussion" the preparation of polypseudorotaxane by adding α, ω-diamino-polyethylene glycol (diamino-PEG) (MW = 2000) into aqueous solutions containing different ratios of naphthalene-modified α-CD (NpCD) and native α-CD (CD being cyclodextrine). The polypseudorotaxanes are converted into polyrotaxanes by the reaction of the amino groups of a diamino-PEG chain with 9-anthraldehyde for 2 h in DMF. The polyrotaxanes are described to be soluble in DMSO, DMF, and propylene glycol.

Kalashnikov P.A., Sokolov V.I:, Topchieva I.N.: "Synthesis of polyrotaxanes based on alpha-cyclodextrin and poly(ethylene oxide)" discloses the synthesis of polyrotaxane with the use of poly(ethylene oxide)-α,ω-bis- amine as a linear component. The end groups of the polymer in the inclusion complex were modified by the reaction with 2,4-dinitrofluorobenzene. The product is described to be soluble in water and DMF.

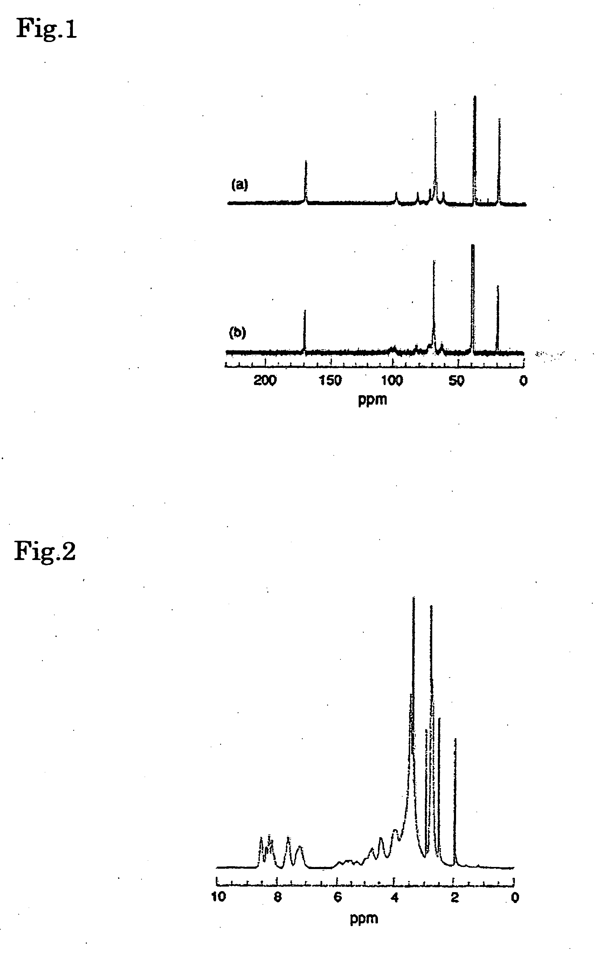

Park H.D. Lee W.K., Ooya T., Park K.D., Kim Y.H., Yui N.: "In vitro biocompatibility assessment of sulfonated polyrotaxane-immobilized polyurethane surfaces" relates to sulfonated polyrotaxanes (PRx-SO₃'s), in which sulfonated α-cyclodextrines (α-CDs) were threaded onto the poly(ethylene glycol) (PEG) segments in a PEG-b-poly(propylene glycol) (PPG)-b-PEG triblock copolymer (pluronic) capped with benzyloxycarbonyl (Z)-L-phenylalanine (Z-L-Phe). In Fig. 1 a synthetic procedure of sulfonated polyrotaxane is illustrated without specifying a solvent. Moreover, 1,3-propane sultone is used as a sulfonating agent.

Watanabe J et al: "Effect of acetylation of biodegradable polyrotaxanes on its supramolecular dissociation via terminal ester hydrolysis" discloses a process for the acetylation of polyrotaxanes using acetic anhydride. The reaction is carried out by adding the polyrotaxane to a mixture of acetic anhydride and dry pyridine.

Joung et al: "Anticoagulatn supramolecular-structured polymers: Synthesis and anticoagulant activity of taurine-conjugated carboxyethylester-polyrotaxanes" relates to the synthesis of polyrotaxanes with both sulfonyl and carboxyl groups. D5 states that "The Z-L-Tyr-terminated polyrotaxanes (...) and succinic anhydride (...) (as the stoichiometric ratio of hydroxyl groups in the Z-L-Tyr-terminated polyrotaxanes) were dissolved in dried pyridine (...) and stirred at room temperature for 24 h".

In JP 2003 3275454 A, DMSO is used as a solvent in the preparation of CDI activated polyrotaxane solution. The CDI activated polyrotaxane solution is added to ethylenediamine to prepare AEC-polyrotaxane, or is added to mixed solvent of ethylenediamine and aminoethanol to introduce AEC groups and hydroxyethylcaramoyl groups.

In WO 2005 095493 A1, DMSO or NaOH aqueous solution is used as a solvent.

### DISCLOSURE OF THE INVENTION

### PROBLEMS TO BE SOLVED BY THE INVENTION

An object of the present invention is to provide a polyrotaxane-containing solution by finding a good solvent for polyrotaxanes, and more particularly, to provide a polyrotaxane-containing solution by finding a good solvent for polyrotaxanes with a cyclodextrin as the cyclic molecule(s). In addition, an object of the present invention is to provide a method for derivatizing polyrotaxanes by using a polyrotaxane-containing solution with a cyclodextrin as the cyclic molecule(s), and to provide novel polyrotaxane derivatives by the method.

### PROBLEMS TO BE SOLVED BY THE INVENTION

As a result of conducting extensive studies, the inventors of the present invention found that a solvent(s) selected from the group consisting of nitrogen-containing organic solvent and an ionic liquid can be a good solvent for polyrotaxanes, and particularly that a solution of an amide-based organic solvent (such as dimethylacetamide) containing an alkali metal halide or an alkaline earth metal halide (such as lithium chloride) as a solute; or an ionic liquid which is a halide, is a good solvent for polyrotaxanes, thereby leading to completion of the present invention.

### EFFECT OF THE INVENTION

The polyrotaxane-containing solution of the present invention can be blended with other organic materials, may be used for molding polyrotaxanes (such as injection molding or casting), or may be used in various reactions involving polyrotaxanes, and is therefore highly useful. More specifically, the polyrotaxane-containing solution of the present invention also enables derivatization (such as acylation or sulfonylation) of polyrotaxanes with a cyclodextrin as the cyclic molecule(s), which has thus far been difficult with conventional solvents such as DMSO and aqueous NaOH. Furthermore, the polyrotaxane-containing solution of the present invention may be used in the following application technologies which have been developed for polyrotaxanes: molecular tubes obtained by crosslinking adjacent cyclic molecules of polyrotaxane followed by de-including the central linear molecule; drug delivery systems for releasing a drug by biodegrading a compound containing a polyrotaxane in the body; molecular covered wires in which a central linear molecule of a polyrotaxane is used as an electrically conductive polymer and covered with an insulating cyclic molecule(s);and topological gels comprised of crosslinked cyclic molecules fo polyrotaxane.

### BRIEF DESCRIPTION OF THE DRAWINGS

FIG. 1A shows a ¹³C NMR analysis chart of a polyrotaxane acetylated in an N,N-dimethylacetamide (DMAc)/LiCl system, and FIG. 1B shows a ¹³C NMR analysis chart of a polyrotaxane acetylated in DMSO;
FIG. 2 shows a ¹H NMR analysis chart of a polyrotaxane dansylated in a DMAc/LiCl system;
FIG. 3 shows a fluorescence spectra of a polyrotaxane dansylated in a DMAc/LiCl system; and,
FIG. 4 indicates a difference in fluorescence between an unmodified polyrotaxane solution (left) and a dansylated polyrotaxane solution (right) when irradiated with ultraviolet light.

### BEST MODE FOR CARRYING OUT THE INVENTION

In the present invention, a "polyrotaxane" or "polyrotaxane molecule" refers to a molecule having a linear molecule passing through an opening(s) of a cyclic molecule(s) in a skewered manner so that the cyclic molecule(s) include the linear molecule to form a pseudo-polyrotaxane in which blocking groups are arranged on both ends thereof (both ends of the linear molecule) to prevent elimination of the cyclic molecule(s).

In the present invention, a linear molecule refers to a molecule or substance that is included by a cyclic molecule(s) and may be combined by non-covalent bonding. There are no particular limitations on these linear molecules provided they are linear, and any such molecules, including polymers, can be used.

A "linear" of a "linear molecule" refers to a substantially "linear chain". Namely, if a rotator in the form of a cyclic molecule is able to rotate or a cyclic molecule is able to slide or move over the linear molecule, then the linear molecule may have a branched chain. In addition, there are no particular limitations on the length of the "linear chain" provided it allows the cyclic molecule(s) to slide or move on the linear molecule.

The "linear" of the "linear molecule" is determined relatively in the relationship with the polyrotaxane material. Namely, in the case of a material having a crosslinked structure in a portion thereof, the linear molecule may be present in only a very small portion of the material. However, even if present in only a very small portion, there are no particular limitations on the length thereof provided it allows the cyclic molecule(s) to slide or move on the linear molecule.

Both hydrophilic and hydrophobic polymers may be used for the linear molecule. Examples of hydrophilic polymers include polyvinyl alcohol and polyvinyl pyrrolidone, poly(meth)acrylic acid, cellulose resins (such as carboxymethyl cellulose, hydroxyethyl cellulose or hydroxypropyl cellulose), polyacrylamide, polyethylene oxide, polyethylene glycol, polyvinyl acetal resins, polyvinyl methyl ether, polyamine, polyethylene imine, casein, gelatin, starch and/or copolymers thereof.
Examples of hydrophobic polymers include polyolefin resins such as polyethylene, polypropylene and copolymer resins of other olefin monomers, polyester resin, polyvinyl chloride resin, polystyrene resins such as polystyrene and acrylonitrile-styrene copolymer resins, acrylic resins such as polymethyl methacrylate and (meth)acrylic acid ester copolymers, acrylonitrile-methyl methacrylate copolymer resins, polycarbonate resin, polyurethane resin, vinyl chloride-vinyl acetate copolymer resin or polyvinyl butyral resin, and derivatives or modified forms thereof. Furthermore, polyisobutylene, polytetrahydrofuran, polyaniline, acrylonitrile-butadiene-styrene copolymer (ABS resin), polyamides such as Nylon, polyimides, polyisoprene, polydienes such as polybutadiene, polysiloxanes such as polydimethylsiloxane, polysulfones, polyimines, polyacetic anhydrides, polyureas, polysulfides, polyphosphazenes, polyketones, polyphenylenes, polyhaloolefins and derivatives thereof can be used.

Among these, polyethylene glycol, polyisoprene, polyisobutylene, polybutadiene, polypropylene glycol, polytetrahydrofuran, polydimethylsiloxane, polyethylene and polypropylene are preferable. Polyethylene glycol is particularly preferable.

The number average molecular weight of the linear molecule is preferably 1,000 or more, for example, 1,000 to 1,000,000, more preferably 5,000 or more, for example, 5,000 to 1,000,000 or 5,000 to 500,000, and even more preferably 10,000 or more, and for example, 10,000 to 1,000,000, 10,000 to 500,000 or 10,000 to 300,000.

The linear molecule preferably has reactive groups on both ends thereof. The linear molecule may easily react with blocking groups by these reactive groups. Although dependent upon the blocking groups used, examples of reactive groups include a hydroxyl group, amino group, carboxyl group and thiol group.

The cyclic molecules of the present invention include various cyclodextrins, for example, unmodified cyclodextrins such as α-cyclodextrin, β-cyclodextrin or γ-cyclodextrin. A Polyrotaxane with a cyclodextrin as the cyclic molecule(s) are generally known to be insoluble and have few good solvents. Although this insolubility is believed to be due to the formation of intramolecular/intermolecular hydrogen bonds by hydroxyl groups present in a cyclodextrin, the details of this mechanism are unknown. These cyclodextrins may be cyclodextrins in which hydroxyl groups thereof are partially modified, such as dimethylcyclodextrin, hydroxypropylcyclodextrin or acetylcyclodextrin.

The aforementioned cyclodextrins have different sizes of the opening of the cyclic molecule depending on the type thereof. Thus, the cyclic molecule may be selected according to the type of a linear molecule used, and more specifically, when the linear molecule is regarded to be a cylinder, it may be selected depending on the diameter of the cross-section of the cylinder, the hydrophobicity or hydrophilicity of the linear molecule and the like. In addition, in the case of a cyclic molecule with a relatively large opening and a cylindrical linear molecule with a relatively small diameter, two or more linear molecules can be included in the opening of the cyclic molecule.

There are no particular limitations on the blocking groups provided they are groups that allow the cyclic molecule(s) to be maintained in a skewered state by the linear molecule, and any such groups may be used. Examples of such groups include groups having "bulkiness" and/or groups having "ionicity". Here, a "group" refers to various groups including molecular groups and polymer groups. Namely, a group having "bulkiness" may be a group schematically represented in a spherical form, or a solid support represented in the manner of a sidewall. In addition, as a result of the mutual effects of the "ionicity" of group having "ionicity" and the "ionicity" of a cyclic molecule, the cyclic molecule is able to be maintained in a skewered state by a linear molecule due to, for example, mutual repulsion.

In addition, the blocking group may be a main chain or side chain of a polymer provided it maintains a skewered state as described above. When the blocking group is polymer A, the blocking group may be in a state in which polymer A serves as a matrix and a crosslinked structure is contained in a portion thereof, or it may be conversely be in a state in which a polyrotaxane material containing a crosslinked structure serves as a matrix and polymer A is contained in a portion thereof. In this manner, by combining with polymer A having various properties, a composite material may be formed having a combination of the properties of polyrotaxane material and the properties of polymer A.

More specifically, examples of blocking groups in the form of molecular groups include dinitrophenyl groups such as a 2,4-dinitrophenyl group or 3,5-dinitrophenyl group, cyclodextrins, adamantane groups, trityl groups, fluoresceins, pyrenes and derivatives or modified forms thereof. More specifically, even in the case of using α-cyclodextrin for the cyclic molecule(s) and polyethylene glycol for the linear molecule, examples of blocking groups include cyclodextrins, dinitrophenyl groups such as a 2,4-dinitrophenyl group or 3,5-dinitrophenyl group, adamantane groups, trityl groups, fluoresceins, pyrenes and derivatives or modified forms thereof.

When preparing the pseudo-polyrotaxane, it is preferable to control the amount of cyclic molecules that are skewered by the linear molecule. It is preferable that at least two cyclic molecules are skewered by the linear molecule, so that at least two cyclic molecules include the linear molecule. In addition, when the amount of cyclic molecules that can be maximally present on the linear molecule, or in other words the maximum inclusion amount, is defined as 1, cyclic molecules are preferably present at a value of 0.001 to 0.6, preferably 0.01 to 0.5, and more preferably 0.05 to 0.4 of the maximum inclusion amount.

The polyrotaxane of the present invention preferably has blocking groups such as adamantane groups or dinitrophenyl groups arranged on the pseudo-polyrotaxane, wherein a cyclodextrin, preferably α-cyclodextrin as the cyclic molecule(s) includes polyethylene glycol as the linear molecule.

Examples of amide-based organic solvents include primary amides such as formamide, N-methylformamide, N,N-dimethylformamide, N,N-diethylformamide, acetamide, N-methylacetamide or N,N-dimethylacetamide, and cyclic amides such as 2-pyrrolidone, N-methyl-2-pyrrolidone or 1,3-dimethyl-2-imidazolidinone. These can be used alone or in a mixture thereof with a suitable ratio.

The amide-based organic solvents indicated above can be used to prepare the polyrotaxane-containing solution of the present invention. In particular, it is preferable to use a tertiary amine oxide or a hydrate thereof, and particularly N-methylmorpholine-N-oxide monohydrate, alone.

In addition to the amide-based organic solvents indicated above, an alkali metal halide or an alkaline earth metal halide is added as a solute to prepare the polyrotaxane-containing solution of the present invention. Examples of alkali metal halides that can be added to the polyrotaxane-containing solution include lithium bromide, lithium chloride, potassium chloride, potassium bromide and hydrates thereof. Examples of alkaline earth metal halides include calcium chloride, magnesium chloride, calcium bromide and magnesium bromide. Lithium halides and hydrates thereof are preferable, and lithium chloride (anhydrous) is particularly preferable. The use of an amide-based organic solvent such as N,N-dimethylformamide, N,N-dimethylacetamide or N-methyl-2-pyrrolidone with lithium chloride is particularly preferable.

In the present invention, an ionic liquid refers to an organic compound salt having a melting point of 150°C or lower, vapor pressure at room temperature (about 25°C) of zero (or substantially zero), high dissolving power and a broad range of liquid phase. In general, such liquids are commercially available as ionic liquids. The ionic liquid is preferably a halide.

An ionic liquid of the present invention is particularly preferably an organic compound salt represented by the formula: M⁺X⁻ (wherein, the cation M⁺ is selected from the group consisting of an ammonium compound, imidazolium compound, pyridinium compound or phosphonium compound, and the anion X⁻ is selected from a halogen anion such as F⁻, Cl⁻, Br⁻ or I⁻), having a melting point of 150°C or lower.

Examples of an ammonium compound as the cation M⁺ of the ionic liquid include aliphatic quaternary ammonium compounds, specific examples of which include tetraalkylammonium compounds such as tetrabutylammonium and tetrapentylammonium. Similarly, examples of an imidazolium compound as the cation M⁺ of the ionic liquid include N,N'-dialkylimidazolium compounds such as 1-ethyl-3-methylimidazolium, 1-butyl-3-methylimidazolium, 1-hexyl-3-methylimidazolium, 1-decyl-3-methylimidazolium or 1-butyl-2,3-dimethylimidazolium. Moreover, examples of a pyridinium compound as the cation M⁺ include N-alyklpyridinium compounds such as 1-hexylpyridinium, 1-butyl-3-methylpyridinium or 1-butyl-4-methylpyridinium. In addition, examples of a phosphonium compound as the cation M⁺ include tetraalkylphosphonium compounds such as tetrabutylphosphonium, triisobutylmethylphosphonium or trihexyltetradecylphosphonium.

Examples of the ionic liquid of the present invention include halides of N,N'-dialkylimidazoliums such as 1-ethyl-3-methylimidazolium, 1-butyl-3-methylimidazolium, 1-hexyl-3-methylimidazolium or 1-decyl-3-methylimidazolium, and chlorides are used particularly preferably. Alternatively, other examples of the ionic liquid include halides of N-alkylpyridiniums such as 1-hexylpyridinium, and chlorides are used particularly preferably.

The polyrotaxane-containing solution of the present invention, in addition to a solvent selected from the nitrogen-containing organic solvent or ionic liquid described above, may further contain other solvents compatible therewith within a range that does not impair the polyrotaxane solubility. Examples of other solvents include water, alcohols, ketones and ethers.

One preferred embodiment of the present invention is a polyrotaxane-containing solution in which a polyrotaxane is dissolved in a tertiary amine oxide or a hydrate thereof, particularly in N-methylmorpholine-N-oxide monohydrate. This solution can be prepared by, for example, preferably adding a ground polyrotaxane to N-methylmorpholine-N-oxide monohydrate melted by heating to about 90°C followed by stirring. A concentration of the polyrotaxane in the polyrotaxane-containing solution may be suitably varied depending on the types, molecular weight and so on of the linear molecule and cyclic molecule(s) that compose the polyrotaxane, or depending on the application of the polyrotaxane-containing solution. It is generally 0.1 to 50% by weight, preferably 1 to 30% by weight and more preferably 1 to 20% by weight.

Another preferred embodiment of the present invention is a polyrotaxane-containing solution in which a polyrotaxane is dissolved in a solution of an amide-based nitrogen-containing organic solvent such as N,N-dimethylacetamide, N,N-dimethylformamide or N-methyl-2-pyrrolidone, containing an alkali metal halide or an alkaline earth metal halide such as lithium chloride as a solute. Although the alkali metal halide or the alkaline earth metal halide is preferably present at 5 to 10% by weight based on the amide-based nitrogen-containing organic solvent from the viewpoint of the solubility of the polyrotaxane, it is not limited thereto. The polyrotaxane-containg solution is most preferably a polyrotaxane-containing solution in which a polyrotaxane is dissolved in a solution of N,N-dimethylacetamide containing lithium chloride as a solute, and lithium chloride is present at 5 to 10% by weight based on the N,N-dimethylacetamide.

The polyrotaxane-containing solution in the present invention can be prepared by, for example, first dissolving a prescribed amount of lithium chloride in N,N-dimethylacetamide to prepare an N,N-dimethylacetamide solution having a desired concentration of lithium chloride, and then adding a polyrotaxane to the resulting solution and dissolving by stirring.

The polyrotaxane can be dissolved in the N,N-dimethylacetamide solution containing lithium chloride by stirring at room temperature. It is preferably dissolved by stirring at 10 to 80°C and more preferably at 15 to 60°C. If the temperature is 50°C or higher, dissolution is promoted and is particularly effective in the case coarse particles are present. On the other hand, maintaining the temperature at 80°C or lower inhibits decomposition of the polyrotaxane by heating.

Furthermore, the polyrotaxane-containing solution of the present invention may also be obtained by simultaneously adding a polyrotaxane and lithium chloride to N,N-dimethylacetamide and then dissolving. Alternatively, a polyrotaxane may be added to N,N-dimethylacetamide and dispersed therein followed by adding lithium chloride.

A concentration of the polyrotaxane in the polyrotaxane-containing solution may be suitably varied depending on the type, molecular weight and so on of the linear molecule and cyclic molecule(s) that compose the polyrotaxane, or depending on the application of the polyrotaxane-containing solution. It is generally 0.1 to 50% by weight, preferably 0.1 to 30% by weight, and more preferably 1 to 20% by weight.

A preferred embodiment of the present invention is a polyrotaxane-containing solution in which a polyrotaxane is dissolved in an ionic liquid such as an N,N'-dialkylimidazolium salt or N-alkylpyridinium salt, and more preferably a polyrotaxane-containing solution in which a polyrotaxane is dissolved in an ionic liquid such as an N,N'-dialkylimidazolium chloride or N-alkylpyridinium chloride. This solution can be prepared by, for example, adding a polyrotaxane to the ionic liquid used (after dissolving by heating to a temperature above the melting point thereof in the case of being a solid at room temperature) followed by stirring. A concentration of the polyrotaxane in this polyrotaxane-containing solution may be suitably varied depending on the type, molecular weight and so on of the linear molecule and cyclic molecule(s), or depending on the application of the polyrotaxane-containing solution. It is generally 0.1 to 50% by weight, preferably 0.1 to 30% by weight, and more preferably 1 to 20% by weight.

Commonly used additives (such as propyl gallate or other stabilizer), desired reagents (such as a crosslinking agent) or other components (such as cellulose or other polymeric materials) may also be contained in the polyrotaxane-containing solution of the present invention within a range that does not impair the polyrotaxane solubility.

The polyrotaxane in the polyrotaxane-containing solution of the present invention is understood to be dissolved without being decomposed or modified and the like. Consequently, the polyrotaxane-containing solution is useful for blending polyrotaxanes with other organic materials or various types of molding using polyrotaxane (such as injection molding or casting), and may also be made into a film or fibrous molded article by casting, for example.

In addition, the polyrotaxane-containing solution of the present invention can be used in various reactions using polyrotaxanes, and is particularly useful for derivatizing polyrotaxanes. A typical example of a polyrotaxane is that in which the linear molecule is PEG and the cyclic molecule(s) is CD. Although studies have been previously conducted on their derivatization by modifying the hydroxyl groups on CD which is the cyclic molecule, the reaction conditions in DMSO and aqueous NaOH are quite limited. Thus, the present invention also provides a method for preparing derivatives of polyrotaxanes comprising the use of a polyrotaxane-containing solution (wherein, the cyclic molecule(s) of the polyrotaxane is a cyclodextrin).

At first, acetylation by acetic anhydride is mentioned. If DMSO and acetic anhydride are both present in a reaction system, DMSO acts as an oxidizing agent, resulting in the oxidation of primary and secondary hydroxyl groups to carbonyl groups(so-called Albright-Goldmann oxidation). Namely, since the combination of DMSO and acetic anhydride functions as an oxidizing agent, when hydroxyl groups of CD of a polyrotaxane having the aforementioned combination for the linear molecule and the cyclic molecule(s) are attempted to be acetylated using acetic anhydride in DMSO, oxidation occurs prior to acetylation. In addition, so-called Pummerer rearrangement occurs in which DMSO is rearranged by reacting with acetic anhydride. On the other hand, the polyrotaxane-containing solution of the present invention allows acetylation of polyrotaxane to take place while avoiding these reactions.

Secondly a reaction using an acyl chloride is mentioned. Acyl chloride is widely known to result in danger due to its violent, and occasionally explosive, reaction with DMSO. On the other hand, the polyrotaxane-containing solution of the present invention allows acyl chloride and polyrotaxane to react gently.

Another example is that of sulfonylation, and particularly direct dansylation. Dansyl chloride (dimethylaminonaphthalene sulfonyl chloride) is known to impart a fluorescence generator by rapidly reacting with a primary amino group, thiol group or phenolic hydroxyl group and the like. The dansyl chloride is also known to react with an aliphatic hydroxyl group, although the reaction rate is slower than the aforementioned groups. Therefore, hydroxyl groups of CD of a polyrotaxane can be expected to be converted to a fluorescence generator by dansyl chloride.

However, since dansyl chloride is reported to strongly react with DMSO (Boyle, R.E., J. Org. Chem. 31, 3880 (1966)), DMSO cannot be used as a solvent not only for dansylation of polyrotaxanes, but for any dansylation in general. On the other hand, in aqueous NaOH, hydrolysis of dansyl chloride occurs and as a result thereof, dansylation is predicted not to proceed. The polyrotaxane-containing solution of the present invention allows dansylation of polyrotaxane to be carried out while avoiding these reactions.

Furthermore; the polyrotaxane-containing solution of the present invention may also be applied to a derivatization reaction able to be carried out in conventional DMSO or NaOH solution. Examples of this derivatization reaction include, but are not limited to, alkylation, ether derivatization, carbamoylation, amidation and silylation.

Thus, the derivatization products relate to novel polyrotaxane derivatives in which hydroxyl groups on the cyclodextrin(s) of a polyrotaxane having cyclodextrin(s) for the cyclic molecule(s).are partially or completely acylated or sulfonylated, and preferably relate to polyrotaxane derivatives in which blocking groups (preferably adamantane groups or dinitrophenyl groups) are arranged on both ends of a pseudo-polyrotaxane which has a cyclodextrin(preferably α-cyclodextrin) for a cyclic molecule, and polyethylene glycol for a linear molecule, wherein the hydroxyl groups on the cyclodextrin are partially or completely acylated or sulfonylated.

Here, acylation refers to a state in which protons of hydroxyl groups are partially or completely substituted with the formula RCO-, wherein R preferably represents a linear or branched alkyl group having 1 to 6 carbon atoms or aryl group having 1 to 18 carbon atoms, and these may be optionally substituted. In a preferred embodiment of the present invention, acylation refers to, for example, acetylation, benzoylation, naphthoylation or phenylbenzoylation.

Here, sulfonylation refers to a state in which protons of hydroxyl groups are partially or completely substituted with the formula R'SO₂-, wherein R' preferably represents a linear or branched alkyl group having 1 to 6 carbon atoms or an aryl group having 1 to 18 carbon atoms, and these may be optionally substituted. In a preferred embodiment of the present invention, sulfonylation refers to, for example, benzenesulfonylation, tosylation or dansylation.

The polyrotaxane-containing solution of the present invention can be used in previous polyrotaxane application technologies, such as molecular tubes obtained by crosslinking adjacent cyclic molecules of polyrotaxane followed by de-including the central linear molecule; drug delivery systems for releasing a drug by biodegrading a compound containing a polyrotaxane in the body;molecular covered wires in which a central linear molecule of a polyrotaxane is used as an electrically conductive polymer and covered with insulating cyclic molecules; and topological gels comprised of crosslinked cyclic molecules of polyrotaxanes.

### EXAMPLES

Although the following provides a more detailed explanation of the present invention based on examples thereof, the present invention is not limited to these examples.

Measurement of NMR, GPC and fluorescence spectra in the examples were carried out in the manner described below.
¹H NMR (400 MHz) and ¹³C NMR (100 MHz) were measured at room temperature in DMSO-d₆ using the JEOL JNM-AL400 (JEOL Corp.). Tetramethylsilane was used for the internal standard to determine chemical shifts.
GPC was measured with the TOSOH SC-8010 chromatogram (Tosoh Corp.),'equipped with the Shodex K-800D column and Shodex K-805L column (x2), using DMSO for the eluent (0.4 ml/min, 40°C), RI and UV/VIS detectors and PEG for the standard.
Fluorescence spectra were measured with the F-3010 Fluorescence Spectrophotometer (Hitachi, Ltd.).

### Example 1: Preparation of Polyrotaxane

The following materials were used to prepare a polyrotaxane-containing solution.
A polyrotaxane manufactured by Advanced Soft Materials Co., Ltd. prepared from PEG having terminal carboxyl groups, α-CD and adamantane amine was used for the polyrotaxane. This polyrotaxane is a white powder, the weight average molecular weight of PEG (the linear molecule) was 35,000, and number of CD per molecule of polyrotaxane was 90 to 100 (inclusion amount: 22 to 25%), and the amount of hydroxyl groups per gram of the polyrotaxane was 13.11 mmol.

The ¹H NMR spectrum of this solid is shown below. ¹H NMR (DMSO-d₆) (400 MHz): δ 5.64 (O(2)H of CD), 5.46 (O(3)H of CD), 4.80 (C(1)H of CD), 4.44 (O(6)H of CD), 3.20-3.80 (C(2)H, C(3)H, C(5)H and C(6)H of CD), 3.51 (CH₂ of PEG), 2.01, 1.94, 1.62 (adamantane).

### Example 2: Preparation of Polyrotaxane

The following materials were used to prepare a polyrotaxane-containing solution.
Polyrotaxane was prepared from PEG having amino groups on the ends thereof (MW = 2,000, NOF Corp.), α-CD (Nippon Shokuhin Kako Co., Ltd.) and 2,4-dinitrofluorobenzene (Wako Pure Chemical Industries, Ltd.) according to the method described in J. Org. Chem., 1993, 58, 7524-7528 (Harada, et al.). This polyrotaxane is a yellow powder, the weight average molecular weight of PEG(the linear molecule) was 2,000, the number of CD per molecule of polyrotaxane was about 20, the inclusion amount was about 100%, and the amount of hydroxyl groups per gram of the polyrotaxane was 18 mmol.

The ¹H NMR spectrum of this solid is shown below. The resulting spectral data was similar to the results described in the aforementioned paper by Harada, et al.
¹H NMR (DMSO-d₆) (400 MHz): δ 8.86, 8.24, 7.25 (aromatic protons), 5.64 (O(2)H of CD), 5.46 (O(3)H of CD), 4.80 (C(1)H of CD), 4.44 (O(6)H of CD), 3.20-3.80 (C(2)H, C(3)H, C(5)H and C(6)H of CD), 3.51 (CH₂ of PEG).

### Example 3 (Comparative Example): Preparation of Polyrotaxane-Containing Solution (Amine-Based Organic Solvent)

N-methylmorpholine-N-oxide (NMMO) monohydrate was a laboratory grade reagent manufactured by Wako Pure Chemical Industries, Ltd., and was used without further purification:
9.5 g of NMMO monohydrate was melted by heating to 90 to 100°C followed by the addition of 0.5 g of the polyrotaxane of Example 1 and 0.1 g of propyl gallate and stirring for 2 hours to obtain a slight brown, viscous and clear polyrotaxane-containing solution. This polyrotaxane-containing solution was stable and maintained the state of a clear solution for several hours if held at room temperature.

This solution resulted in the precipitation of a white precipitate when added to a large amount of ethanol. As a result of recovering this precipitate.and analyzing by ¹HNMR and GPC, the precipitated substance was found to be an unmodified polyrotaxane although having a somewhat increased polydispersivity (from 1.3 to 1.6). Thus, the polyrotaxane structure was determined to be maintained even in solution.

### Example 4: Preparation of Polyrotaxane-Containing Solution (Amide-Based Organic Solvent/LiCl System)

N,N-dimethylacet amide (DMAc) was a laboratory grade reagent manufactured by Wako Pure Chemical Industries, Ltd., and was used after preliminarily placing in a 4A molecular sieve (Wako Pure Chemical Industries, Ltd.) and allowing to stand for one day to remove trace amounts of moisture.
Anhydrous lithium chloride (LiCl) was a laboratory grade reagent manufactured by Wako Pure Chemical Industries, Ltd., and was used after preliminarily drying for 2 hours or more at 105°C.

4 g of LiCl was added to 46 g of DMAc, sealed in a container and stirred in an oil bath at 60°C. After completely dissolving the LiCl, 1 g of the polyrotaxane of Example 1 was added followed by continuing to stir in an oil bath at 60°C. Most of the polyrotaxane dissolved within 15 minutes, while only coarse particles thereof dissolved in about 1 hour. After dissolving, the solution was cooled to room temperature to obtain a clear polyrotaxane-containing solution. This polyrotaxane-containing solution was stable and maintained the state of a clear solution even after allowing to stand undisturbed for one week at room temperature.

### Example 5: Recovery of Polyrotaxane from Polyrotaxane-Containing Solution

After having allowed to stand undisturbed for one week at room temperature, the polyrotaxane-containing solution of Example 4 was dropped into 450 ml of ethanol while stirring, the precipitate was isolated by centrifugal separation and then dried under reduced pressure to obtain about 1 g of a white solid. The results of NMR analyses on this white solid and the polyrotaxane manufactured by Advanced Soft Materials Co., Ltd. were confirmed to agree. In addition, as shown in Table 1, both were confirmed to demonstrate similar values with respect to weight average molecular weight and molecular weight distribution.

**Table 1**

| | | M_{w} | M_{w}/Mₙ |
|---|---|---|---|
| Example 1 | Polyrotaxane (Advanced Soft Materials Co., Ltd.) | 118000 | 1.2 |
| | | | |
| Example 4 | Polyrotaxane recovered from polyrotaxane-containing solution | 126556 | 1.53 |
| | | | |
| Example 7 | Polyrotaxane acetylated in DMAc/LiCl | 207760 | 2.12 |
| | | | |
| Example 9 | Polyrotaxane acetylated in DMSO | 167461 | 1 :73 |
| | | | |
| Example 10 | Polyrotaxane dansylated in DMAc/LiCl | 164251 | 1.70 |

N,N-dimethylacetamide containing lithium chloride (DMAc/LiCl system) was determined to be a good solvent for polyrotaxanes based on Examples 4 and 5. In addition, polyrotaxane recovered from a polyrotaxane-containing solution was determined to maintain the original structure thereof and retain the structure of polyrotaxane in a polyrotaxane solution based on Example 5.

### Example 6: Preparation of Polyrotaxane-Containing

### Solution (Ionic Liquid System)

The solubility of polyrotaxane in various ionic liquids was confirmed. 1-ethyl-3-methylimidazolium chloride ([C₂MIM][Cl]) was from Aldrich, 1-butyl-3-methylimidazolium chloride ([C₄MIM][Cl]) and 1-butyl-3-methylimidazolium bromide ([C₄MIM][Br]) were from Fluka, 1-butyl-3-methylimidazolium diethylene glycol monomethyl ester sulfate ([C₄MIM] [MDEGSO₄]) was from Strem Chemicals, 1-hexyl-3-methylimidazolium chloride ([C₆MIM][Cl]), 1-octyl-3-methylimidazolium chloride ([C₈MIM][Cl]), 1-decyl-3-methylimidazolium chloride ([C₁₀MIM][Cl]), 1-butyl-3-methylimidazolium tetrafluoroborate ([C₄MIM][BF₄]), 1-butyl-3- methylimidazolium hexafluorophosphate ([C₄MIM] [PF₆]), 1-butyl-3-methylimidazolium bis(trifluoromethylsulfonyl) imide) ([C₄MIM][TFSI]) and 1-hexylpyridinium chloride ([C₆P][Cl]) were acquired from Kanto Chemical. [C₂MIM] [Cl], [C₄MIM] [Cl], [C₆MIM] [Cl], [C₈MIM] [Cl], [C₁₀MIM] [Cl], [C₄MIM] [Br] and [C₆P] [Cl] were purified by washing several times with ethyl acetate followed by holding at 105°C for at least one week. The other ionic liquids were used without further purification.

The polyrotaxanes of Examples 1 and 2 were respectively added to each of the above-mentioned ionic liquids to a polyrotaxane content of 1% by weight followed by stirring for 2 to 3 hours at 105°C. Those results are shown in Table 2.

**Table 2**

| Ionic liquid | PR^{*1} | PR^{*2} | α-CD | PEG35,000^{*3} |
|---|---|---|---|---|
| [C₄MIM][Cl] | + | + | + | + |
| [C₄MIM][Br] | + | + | + | + |
| [C₄MIM][BF₄] | - | - | - | - |
| [C₄MIM][PF₆] | - | - | - | - |
| [C₄MIM][TFSI] | - | - | - | + |
| [C₄MIM][MDEGSO₄] | - | - | + | - |
| [C₆P][Cl] | + | + | + | + |
| [C₂MIM][Cl] | + | + | + | + |
| [C₄MIM][Cl] | + | + | + | + |
| [C₆MIM][Cl] | + | + | + | + |
| [C₈MIM][Cl] | + | + | + | + |
| [C₁₀MIM][Cl] | + | + | + | + |

| | | | | |
|---|---|---|---|---|
| +: Clear -: Precipitate (solubility of 1% by weight or less) *1: Polyrotaxane of Example 1 *2: Polyrotaxane of Example 2 *3: Polyrotaxane obtained from Fluka | | | | |

Ionic liquids containing a halogen anion were determined clearly to be good solvents for polyrotaxanes. Furthermore, the resulting polyrotaxane-containing solutions were stable and maintained the state of a clear solution even after allowing to stand undisturbed for 2 weeks at room temperature. In addition, as a result of conducting a similar experiment while changing the polyrotaxane content, the polyrotaxane of Example 1 was confirmed to dissolve at least 10% by weight in, for example, [C₄MIM] [Cl].

A white precipitate resulted when a large amount of ethanol was added to the [C₄MIM] [Cl] solution and [C₈MIM][Cl] solution of the polyrotaxane of Example 2. As a result of recovering this precipitate and analyzing by ¹H NMR and GPC, the precipitated substance was determined to be unmodified polyrotaxane. Thus, the polyrotaxane structure was determined to be maintained even in an ionic liquid.

### Example 7: Acetylation of Polyrotaxane in DMAc/LiCl System - Part 1

5.20 g (65.7 mmol) of dry pyridine and 6.70 g (65.6 mmol) of acetic anhydride were added to the polyrotaxane-containing solution obtained in Example 4 (1 g of polyrotaxane in 50 g of DMAc/LiCl). Next, a solution containing 0.1 g of 4-dimethylaminopyridine (DMAP) dissolved in 10 ml of DMAc was added followed by stirring overnight at room temperature. The resulting mixed brown liquid was dropped into 450 ml of methanol while stirring, and the precipitate was recovered by centrifugal separation. The resulting precipitate was dissolved in 20 ml of acetone followed again by dropping into 450 ml of methanol while stirring, recovering the precipitate by centrifugal separation and drying to obtain 1.16 g of a pale yellow to pale orange solid. This solid dissolved in DMSO, dimethylformamide (DMF), tetrahydrofuran (THF), acetone and dichloromethane.

Peaks characteristic of acetyl group were observed in ¹H NMR and ¹³C NMR analyses of this solid. The ¹³C NMR analysis chart is shown in FIG. 1A.
¹H NMR (δ, ppm): 1.90-2.20 (acetyl proton), 3.60 (CH₂ of PEG), 3.88 (H4), 4.10-4.60 (H5, H6, H6'), 4.86 (H2), 5.00-5.10 (H1), 5.44 (H3)
¹³C NMR (δ, ppm): 20.2-21.4 (acetyl carbon), 62.7 (C-6), 68.8-73.3 (C2, C3, C5), 69.6 (PEG), 82.8 (C-4), 99.0 (C-1), 169.6-170.7 (carbonyl carbon)

The degree of substitution was confirmed to be 2.26 (number of substitutions/glucose) based on changes in hydroxyl group peaks in ¹H NMR analysis after addition of trichloroacetyl isocyanate. The weight average molecular weight and molecular weight distribution are shown in Table 1. The polyrotaxane was confirmed to have been acetylated on the basis of these results.

### Example 8: Acetylation of Polyrotaxane in DMAc/LiCl System - Part 2

5.20 g (65.7 mmol) of dry pyridine and 6.70 g (65.6 mmol) of acetic anhydride were added to the polyrotaxane-containing solution obtained in Example 4 followed by treating for 5 hours at 60°C and recovering the precipitate by centrifugal separation. After purifying the resulting precipitate with water, the precipitate was dried to obtain 1.15 g of a pale yellow to pale orange solid. As a result of subjecting to various analyses, this solid was determined to be identical to the acetylated polyrotaxane obtained in Example 7.

### Example 9 (Comparative Example): Acetylation of Polyrotaxane in DMSO

0.5 g of the polyrotaxane of Example 1 manufactured by Advanced Soft Materials Co., Ltd. was dissolved in 30 ml of DMSO followed by the addition of a solution containing 0.61 g (6 mmol) of acetic anhydride, 1.01 g (10 mmol) of triethylamine and 0.733 g (6 mmol) of DMAP in 30 ml of DMSO, and stirring overnight at room temperature in an argon atmosphere. Subsequently, precipitation with water was repeated twice and the precipitate was filtered followed by freeze-drying to obtain 0.687 g of a white to ivory white solid. Although this solid dissolved in DMSO, it did not dissolve in DMF, THF, acetone or dichloromethane. In addition, peaks originating in cyclodextrin were ambiguous in analyses of the solid by ¹H NMR and ¹³C NMR. The ¹³C NMR analysis chart is shown in FIG. 1B. In addition, the weight average molecular weight and molecular weight distribution are shown in Table 1.

Cyclic molecules of polyrotaxane were determined to be able to be acetylated in a polyrotaxane-containing solution using a DMAc/LiCl system on the basis of Examples 7 and 8. On the other hand, acetylation was determined to proceed with difficulty in a polyrotaxane-containing solution using DMSO based on the results of Example 9.

### Example 10: Dansylation of Polyrotaxane in DMAc/LiCl System

A polyrotaxane-containing solution was prepared in the same manner as Example 4. A solution containing 1 g (3.71 mmol) of dansyl chloride dissolved in 10 ml of DMAc along with 0.663 g (6.56 mmol) of triethylamine was added to 50 g of the polyrotaxane-containing solution containing 0.5 g of polyrotaxane followed by stirring for 24 hours at 10°C. The resulting mixed pale brown liquid was dropped into 450 ml of methanol while stirring, and the precipitate was recovered by centrifugal separation. After adequately washing the resulting precipitate with methanol, the precipitate was dried under reduced pressure to obtain 0.801 g of a yellow solid.

Peaks characteristic of (CH₃)₂N- groups and peaks characteristic of aromatics were observed for this solid in ¹H NMR and ¹³C NMR analyses. The ¹H NMR analysis chart is shown in FIG. 2.
¹H NMR (δ, ppm): 2.70-2.80 ((CH₃)₂N-), 3.44 (CH₂ of PEG), 3.00-6.00 (multiple, H of CD), 7.00-8.50 (aromatic protons).
¹³C NMR: 45.0 ((CH₃)₂N-), 59.4 (C-6), 68.0-72.0 (C-6s, C-2, C-3, C-5), 79.7 (C-4'), 81.8 (C-4), 99.0 (C-1') 102.0 (C-1), 115.4, 119.7, 123.4, 128.5-131.5, 151.2 (aromatic carbons).
Here, "s" stands for substitution, while C-1' and C-4' respectively indicate C-1 and C-4 adjacent to C-2s and C-3s.

In addition, as shown in Table 1, high molecular weight components were observed in GPC analysis, and these exhibited ultraviolet absorption peaks at 254 nm. In addition, the degree of substitution (number of substitutions/glucose) was estimated to be 0.6 based on the increase in weight after the reaction. The weight average molecular weight and molecular weight distribution are shown in Table 1.

A solution (concentration: 0.8% by weight) in which this solid was dissolved in a mixed solvent of DMSO and CH₂Cl₂ (volume ratio: 6:4) emitted intense fluorescence when irradiated with ultraviolet light.

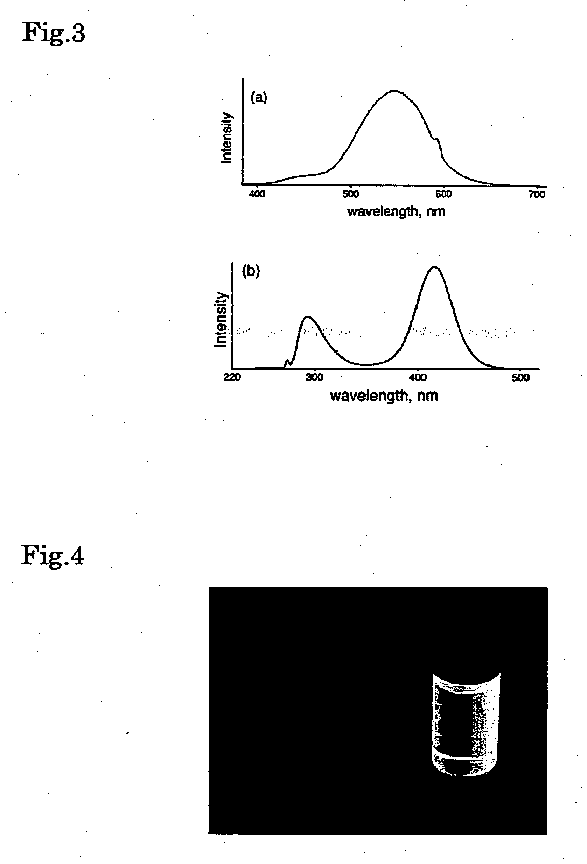

In addition, the fluorescence spectra of a solution containing 12 mg of this solid dissolved in a mixed solvent of DMSO and CH₂Cl₂ (volume ratio: 6:4) is shown in FIG. 3. The peaks of the fluorescence spectra were similar to cellulose dansylated in a DMAc/LiCl system. The polyrotaxane was confirmed to have been dansylated on the basis of these results. In addition, the results for an 8% DMSO solution of unmodified polyrotaxane (Example 1) and an 8% DMSO/CH₂Cl₂ solution (volume ratio: 6:4) of the dansylated polyrotaxane obtained in Example 10 are shown in FIG. 4. The dansylated polyrotaxane obtained in Example 10 was able to be confirmed to emit fluorescence when irradiated with ultraviolet light.

### Example 11 (Comparative Example): Dansylation of Polyrotaxane in DMSO

0.5 g of the polyrotaxane of Example 1 manufactured by Advanced Soft Materials Co., Ltd. was dissolved in 50 ml of DMSO followed by adding a solution containing 1 g (3.71 mmol) of dansyl chloride dissolved in 10 ml of DMSO and 0.663 g (6.56 mmol) of triethylamine and stirring for 24 hours at 10°C. The resulting mixed yellow liquid was dropped into 450 ml of methanol while stirring and the precipitate was recovered by centrifugal separation. After adequately washing the resulting precipitate with methanol, the precipitate was dried under reduced pressure to obtain 0.46 g of a white solid. There were no peaks characteristic of (CH₃)₂N- groups or aromatic rings in ¹H NMR and ¹³C NMR analyses carried out on this solid, and the spectrum was identical to that of unmodified polyrotaxane. Moreover, a DMSO/CH₂Cl₂ solution (volume ratio: 6:4) of this solid did not emit fluorescence when irradiated with ultraviolet light.

Cyclic molecules of polyrotaxane were determined to be able to be dansylated in a polyrotaxane-containing solution using a DMAc/LiCl system based on the results of Example 10. On the other hand, acetylation was determined not to proceed in a polyrotaxane-containing solution using DMSO based on the results of Example 11.

### Example 12: 4-Phenylbenzoylation of Polyrotaxane in a DMAc/LiCl System

4.5 g of anhydrous LiCl was added to 45.5 g of DMAc and dissolved by stirring at 60°C in the presence of argon flow. 500 mg of the polyrotaxane of Example 1 was added to this solution followed by continuing to stir while maintaining a temperature of 60°C to completely dissolve. 0.45 ml (3.3 mmol, 0.5 equivalents (namely, the amount for modifying 50% of the hydroxyl groups of the polyrotaxane)) and 0.71 g (3.3 mmol, 0.5 equivalents) of 4-phenylbenzoyl chloride (4-PBC) were added to the resulting colorless, clear solution followed by stirring for 24 hours at 60°C in the presence of an argon flow. Following the reaction, the solution was precipitated by dropping into a mixed solvent of 200 ml of water and 200 ml of ethanol while stirring, and after recovering the precipitate by centrifugal separation, the precipitate was dried under reduced pressure (60°C, 1.5 hours). The resulting solid was dropped into 30 ml of DMSO and 200 ml of water to re-precipitate followed by recovering the precipitate by centrifugal separation and freeze-drying to obtain 233 mg of a white solid.

An experiment was conducted in the same manner while changing the amounts of 4-PBC and triethylamine added in order to change the modification rate of the hydroxyl groups of the polyrotaxane. Those results are shown in Table 3.

**Table 3**

| run | 4-PBC (mg) | OH equivalent | Et₃N (mg) | Yield (mg) | Molecular weight by GPC measurement (high molecular weight side) |
|---|---|---|---|---|---|
| 1 | 710 | 0.5 | 454 | 223 | 155,000 |
| 2 | 994 | 0.7 | 635 | 410 | 129,000 |
| 3 | 1,420 | 1.0 | 908 | 474 | 144,000 |

Large molecular weight component by GPC measurement (120,000 to 160,000) corresponding to polyrotaxane was determined to demonstrate UV absorption. In addition, the ¹H NMR spectra of the resulting samples demonstrated chemical shifts corresponding to each of the components of polyrotaxane and protons of an aromatic ring. On the basis of these results, 4-phenylbenzoylated polyrotaxane, in which 4-PBC was bound to polyrotaxane, was indicated to have been prepared.

The polyrotaxane obtained in run 3 in Table 3, in which 100% of the hydroxyl groups were modified, was dissolved in methylene chloride to a concentration of 40% by weight. When this solution was then placed between two glass plates and observed while applying shear between cross-nicol, the solution exhibited flow birefringence.
On the basis of this finding, the resulting 4-phenylbenzoylated polyrotaxane was determined to exhibit liquied crystallinity.

### Example 13: Molding Using Polyrotaxane-Containing Solution

A 10% polyrotaxane-containing solution was prepared in accordance with the method described in Example 4 with the exception of adding the polyrotaxane of Example 1 in an amount to obtain a 10% polyrotaxane-containing solution, and the resulting solution was used in the spinning process described below.
The above solution was extruded from a syringe into a a beaker filled with methanol(coagulation bath) to coagulate into threads that settled on the bottom of the beaker. The threads were then wrapped around a centrifuge tube and dried at 60°C to obtain a flexible fibrous molded article having a diameter of about 180 µm.

### INDUSTRIAL APPLICABILITY

The use of a polyrotaxane-containing solution of the present invention makes it possible to further facilitate the applications of polyrotaxane while also enabling derivatization of polyrotaxane considered to be difficult in the prior art. The present invention increases the potential for the use of polyrotaxane as a material.

## Claims

1. A polyrotaxane-containing solution, wherein a polyrotaxane is dissolved in a solvent(s) selected from the group consisting of an amide-based organic solvent containing an alkali metal halide or an alkaline earth metal halide, and an ionic liquid.

2. The polyrotaxane-containing solution according to claim 1, wherein the solvent is an amide-based organic solvent containing an alkali metal halide or an alkaline earth metal halide.

3. The polyrotaxane-containing solution according to claim 2, wherein the alkali metal halide or the alkaline earth metal halide is present at an amount of 5 to 10% by weight based on the amide-based organic solvent.

4. The polyrotaxane-containing solution according to claim 2 or 3, wherein the alkali metal halide or the alkaline earth metal halide is lithium chloride, and the amide-based organic solvent is N,N-dimethylacetamide.

5. The polyrotaxane-containing solution according to claim 1, wherein the solvent is an ionic liquid.

6. The polyrotaxane-containing solution according to claim 5, wherein the ionic liquid is a halide.

7. The polyrotaxane-containing solution according to claim 6, wherein the ionic liquid contains an N,N'-dialkylimidazolium or N-alkylpyridinium as a cation.

8. The polyrotaxane-containing solution according to any one of claims 1 to 7, wherein a concentration of the polyrotaxane in the solution is 0.1 to 50% by weight.

9. The polyrotaxane-containing solution according to any of claims 1 to 8, wherein a cyclic molecule of the polyrotaxane is a cyclodextrin.

10. A process for preparing a polyrotaxane derivative which comprises using the polyrotaxane-containing solution according to claim 9.

11. A process for preparing an acetylated polyrotaxane which comprises using the polyrotaxane-containing solution according to claim 9, and acetylating hydroxyl groups on the cyclodextrin with acetic anhydride.

12. A process for preparing an acylated polyrotaxane which comprises using the polyrotaxane-containing solution according to claim 9, and acylating hydroxyl groups on the cyclodextrin with an acyl halide.

13. A process for preparing a sulfonylated polyrotaxane which comprises using the polyrotaxane-containing solution according to claim 9, and sulfonylating hydroxyl groups on the cyclodextrin with a sulfonyl halide.

## Patentansprüche

1. Polyrotaxan-haltige Lösung, wobei ein Polyrotaxan in einem oder mehreren Lösungsmitteln gelöst ist, das/die ausgewählt sind aus einem Amid-basierten organischen Lösungsmittel, welches ein Alkalimetallhalogenid oder ein Erdalkalihalogenid und eine ionische Flüssigkeit enthält.

2. Polyrotaxan-haltige Lösung gemäß Anspruch 1, wobei das Lösungsmittel ein Amid-basiertes organisches Lösungsmittel ist, welches ein Alkalimetallhalogenid oder ein Erdalkalimetallhalogenid enthält.

3. Polyrotaxan-haltige Lösung gemäß Anspruch 2, wobei das Alkalimetallhalogenid oder das Erdalkalimetallhalogenid in einer Menge von 5 bis 10 Gew.%, bezogen auf das Amid-basierte organische Lösungsmittel, vorliegt.

4. Polyrotaxan-haltige Lösung gemäß Anspruch 2 oder 3, wobei das Alkalimetallhalogenid oder das Erdalkalimetallhalogenid Lithiumchlorid ist und das Amid-basierte organische Lösungsmittel N,N-Dimethylacetamid ist.

5. Polyrotaxan-haltige Lösung gemäß Anspruch 1, wobei das Lösungsmittel eine ionische Flüssigkeit ist.

6. Polyrotaxan-haltige Lösung gemäß Anspruch 5, wobei die ionische Flüssigkeit ein Halogenid ist.

7. Polyrotaxan-haltige Lösung gemäß Anspruch 6, wobei die ionische Flüssigkeit N,N'-Dialkylimidazolium oder N-Alkylpyridinium als Kation enthält.

8. Polyrotaxan-haltige Lösung gemäß irgendeinem der Ansprüche 1 bis 7, wobei eine Konzentration des Polyrotaxans in der Lösung 0,1 bis 50 Gew.% ist.

9. Polyrotaxan-haltige Lösung gemäß irgendeinem der Ansprüche 1 bis 8, wobei ein cyclisches Molekül des Polyrotaxan ein Cyclodextrin ist.

10. Verfahren zur Herstellung eines Polyrotaxanderivats, welches die Verwendung der Polyrotaxan-haltigen Lösung gemäß Anspruch 9 umfasst.

11. Verfahren zur Herstellung eines acetylierten Polyrotaxans, welches die Verwendung der Polyrotaxan-haltigen Lösung gemäß Anspruch 9 und Acetylierung der Hydroxylgruppen des Cyclodextrins mit Acetanhydrid umfasst.

12. Verfahren zur Herstellung eines acetylierten Polyrotaxans, welches die Verwendung der Polyrotaxan-haltigen Lösung gemäß Anspruch 9 und Acetylieren der Hydroxylgruppen des Cyclodextrins mit einem Acylhalogenid umfasst.

13. Verfahren zur Herstellung eines sulfonylierten Polyrotaxans, welches Verwendung der Polyrotaxan-haltigen Lösung gemäß Anspruch 9 und Sulfonylieren der Hydroxylgruppen des Polydetrins mit einem Sulfonylhalogenid umfasst.

## Revendications

1. Solution contenant un polyrotaxane, dans laquelle un polyrotaxane est dissous dans un(des) solvant(s) choisi(s) dans le groupe constitué par un solvant organique à base d'amide contenant un halogénure de métal alcalin ou un halogénure de métal alcalino-terreux et un liquide ionique.

2. Solution contenant un polyrotaxane selon la revendication 1, dans laquelle le solvant est un solvant organique à base d'amide contenant un halogénure de métal alcalin ou un halogénure de métal alcalino-terreux.

3. Solution contenant un polyrotaxane selon la revendication 2, dans laquelle l'halogénure de métal alcalin ou l'halogénure de métal alcalino-terreux est présent dans une quantité de 5 à 10 % en poids par rapport au solvant organique à base d'amine.

4. Solution contenant un polyrotaxane selon la revendication 2 ou 3, dans laquelle l'halogénure de métal alcalin ou l'halogénure de métal alcalino-terreux est du chlorure de lithium, et le solvant organique à base d'amide est du N,N-diméthylacétamide.

5. Solution contenant un polyrotaxane selon la revendication 1, dans laquelle le solvant est un liquide ionique.

6. Solution contenant un polyrotaxane selon la revendication 5, dans laquelle le liquide ionique est un halogénure.

7. Solution contenant un polyrotaxane selon la revendication 6, dans laquelle le liquide ionique contient un N,N'-dialkylimidazolium ou N-alkylpyridinium en tant que cation.

8. Solution contenant un polyrotaxane selon l'une quelconque des revendications 1 à 7, dans laquelle une concentration du polyrotaxane dans la solution est de 0,1 % à 50 % en poids.

9. Solution contenant un polyrotaxane selon l'une quelconque des revendications 1 à 8, dans laquelle une molécule cyclique du polyrotaxane est une cyclodextrine.

10. Procédé de préparation d'un dérivé de polyrotaxane qui comprend l'utilisation d'une solution contenant un polyrotaxane selon la revendication 9.

11. Procédé de préparation d'un polyrotaxane acétylé qui comprend l'utilisation de la solution contenant un polyrotaxane selon la revendication 9, et l'acétylation de groupes hydroxyle sur la cyclodextrine avec de l'anhydride acétique.

12. Procédé de préparation d'un polyrotaxane acylé qui comprend l'utilisation de la solution contenant un polyrotaxane selon la revendication 9 et l'acylation de groupes hydroxyle sur la cyclodextrine avec un halogénure d'acyle.

13. Procédé de préparation d'un polyrotaxane sulfonylé qui comprend l'utilisation de la solution contenant un polyrotaxane selon la revendication 9, et la sulfonylation de groupes hydroxyle sur la cyclodextrine avec un halogénure de sulfonyle.
